# EUROPÄISCHE PATENTSCHRIFT

(11) **EP 1 771 078 B1**
(45) Veröffentlichungstag und Bekanntmachung des Hinweises auf die Patenterteilung: **01.04.2009**
(21) Anmeldenummer: 05749831.3
(22) Anmeldetag: 23.05.2005
(51) Int. Cl.: A23F 3/40, A23L 1/226, A23L 1/22

(54) **TEE-AROMATISIERUNG**
TEA FLAVOURING
AROMATISATION DE THE

(30) Priorität: 26.07.2004 DE 102004036187
(43) Veröffentlichungstag der Anmeldung: 11.04.2007
(73) Patentinhaber: Symrise GmbH & Co. KG, 37603 Holzminden (DE)
(72) Erfinder: BARNEKOW, Rainer, 37696 Marienmünster (DE); BATALIA, Martina, 37691 Boffzen (DE)
(74) Vertreter: Eisenführ, Speiser & Partner
(86) Internationale Anmeldenummer: PCT/EP2005/052346
(87) Internationale Veröffentlichungsnummer: WO 2006/010654

(56) Entgegenhaltungen:
- EP-A- 0 499 858
- WO-A-96/23423
- DE-A1- 3 006 092
- DE-A1- 3 701 230
- DE-A1- 3 931 094
- GB-A- 2 074 838
- US-A- 4 880 649

## Beschreibung

Die vorliegende Erfindung betrifft mit einem sprühgetrockneten Aroma aromatisierten Tee, dessen Herstellung und Verwendung.

Tee im Sinne dieser Erfindung ist sowohl der aus Blättern, Blattknospen und/oder zarten Stielen des Teestrauches Cameilla sinensis (Teestrauch) nach üblichen Verfahren hergestellte Tee (Tee im engeren Sinne), als auch Pflanzenteile, die nicht vom Teestrauch stammen und die dazu zubereitet und bestimmt sind, in der Art wie Tee im engeren Sinne verwendet zu werden (Tee im weiteren Sinne), sowie Mischungen aus Tee im weiteren und im engeren Sinne. Im folgenden wird unter dem Begriff Teepartikel sowohl die Partikel des Tees im engeren Sinne als auch die Pflanzenteile des Tees im weiteren Sinne verstanden.

Insbesondere wird im Sinne der vorliegenden Erfindung unter Tee oder Teeblättern ein Blatt-Tee mit dem Blattgrad "Broken", "Tannings" oder "Dust" verstanden. Fannings sind kleine Aussiebungen, die fast ausschließlich für Aufgussbeutel verwendet werden. Fannings weisen üblicherweise eine Teeblatt- bzw. Partikelgröße im Bereich 0,5 bis 2 mm auf, häufig beträgt die Partikelgröße 0,7 bis 1,5 mm. Tees entsprechend dem Blattgrad "Broken" umfassen üblicherweise Bestandteile mit einer Teeblatt- bzw. Partikelgröße bis 1.5 cm.

Tee im engeren Sinne ist insbesondere schwarzer Tee, Oolong-Tee, grüner Tee einschließlich Pu-Errh-Tee sowie gelber Tee. Tee im weiteren Sinne ist insbesondere Früchte- und/oder Kräutertee basierend beispielsweise auf Rotbusch, Hagebutte, Hibiscus, Äpfel, Orange, Pfefferminze oder Melisse.

Das Aromatisieren von Tee im engeren und weiteren Sinne ist seit langem bekannt, zum Beispiel and GB 2 074 838. Dabei werden üblicherweise entweder flüssige Aromen, feste Aromen, d.h. auf feste Träger aufgebrachte oder in feste Träger eingeschlossene Aromen, oder auch getrocknete Pflanzenstückchen verwendet.

Bei den flüssigen Aromen ist das Aroma nicht vor Verdampfung oder Oxidation geschütz, ferner kann das Aromatisieren mit flüssigen Aromen zur unerwünschten Agglomeration des Tees führen. Bei der Aromatisierung von Tee mittels fester Aromen werden Granulate oder agglomerierte Pulver eingesetzt, da diese größeren Partikel weniger zur Entmischung neigen. Übliche Partikelgrößen von Aromagranulaten betragen 500 µm bis 2 mm.

Es wurde nun eine einfache Methode zur Aromatisierung von Tee mittels eines festen Aromas gesucht, die nicht zu einer Entmischung von Tee und festem Aroma führt.

Gegenstand der vorliegenden Erfindung ist daher ein Verfahren zum Aromatisieren von Tee, umfassend die Schritte:
a) Vorlegen von zu aromatisierenden Teepartikeln,
b) Versehen der im Mischer vorgelegten Teepartikel mit einem Neutralöl zum Benetzen der Oberfläche der Teepartikel, und
c) Untermischen von sprühgetrocknetem Aroma unter die mit dem Neutralöl benetzten Teepartikel.

Durch die Benetzung der Teepartikel, insbesondere von Teeblättern, mit Neutralöl und die anschließende Zugabe des sprühgetrocknetes Aromas unterbleibt die Entmischung von Teeblättern und sprühgetrocknetem Aroma weitgehend. Durch die adhäsive Anlagerung des sprühgetrocknetes Aromas an der Oberfläche der Teeblätter kann eine Entmischung weitgehend vermieden werden.

Die auf diese einfache und preiswerte Weise aromatisierten Teeblätter weisen ein geschütztes Aroma und darüber hinaus einen sehr geringen Staubanteil auf.

Die erfindungsgemäßen aromatisierten Teepartikel und/oder Teeblätter eignen sich auf Grund der genannten Eigenschaften besonders zur Abfüllung und Verwendung in Teebeuteln.

Die Erfindung betrifft daher weiterhin Teebeutel enthaltend efindungsgemäß(e) aromatisierten Tee, insbesondere erfindungsgemäß aromatisierten Tee des Blattgrades "Fannings" und/oder "Broken".

Besonders bevorzugt wird das Verfahren durchgeführt, indem Teeblätter insbesondere des Blatt-Grades "Tannings" und/oder "Broken"
a) bevorzugt in einem fluidisierenden Mischer, vorgelegt werden,
b) Neutralöl auf die, bevorzugt fluidisierten, Teeblätter aufgebracht wird,
c) ein sprühgetrocknetes Aroma auf die mit Neutralöl behafteten Teeblätter gegeben wird und
d) die resultierende Mischung gegebenenfalls weiter gemischt wird.

Das weitere Mischen kann insbesondere dazu dienen, weitere Bestandteile dem Tee einzumischen. Besonders vorteilhaft ist das nachträgliche Einmischen weiterer Bestandteile in einen erfindungsgemäß aromatisierten Tee, wenn diese Bestandteile keinen lang andauernde Mischungsbelastung aushalten, beispielsweise Blüten und andere leicht zerbrechliche Bestandteile.

Bei Aromen zum erfindungsgemäßen Aromatisieren von Tee handelt es sich meist um teils komplex zusammengesetzte flüssige Mischungen in der Regel flüchtiger Komponenten. Aromahaltige Granulate oder Partikel werden für verschiedene Zwecke benötigt und stellen eine gängige Darreichungsform in der Aromenindustrie dar. Branchenüblich ist die Aromeneinkapselung mittels Sprühtrocknung, wie beispielsweise in US 3,159,585, US 3,971,852, US 4,532,145 oder US 5,124,162 beschrieben. Sprühgetrocknete Aromen sind in vielen verschiedenen Geschmacksrichtungen und Partikelgrößen kommerziell erhältlich.

Übliche sprühgetrocknete Aromen umfassen mindestens einen Trägerstoff, ein Aroma oder einen einzelnen Aromastoff sowie weitere Substanzen, wie beispielsweise einen emulgierenden Stoff.

Die Aromabeladung im erfindungsgemäß einzusetzenden sprühgetrockneten Aroma kann, je nach Anforderung und gewünschtem sensorischen Profil, in weiten Bereichen variiert werden. Üblicherweise liegt die Aromabeladung im Bereich von 1 bis 60 Gew.%, meist im Bereich 5 bis 40 Gew.-% bezogen auf das Gesamtgewicht des sprühgetrockneten Aromas.

Als Trägerstoffe für die Aromen in den erfindungsgemäß einzusetzenden sprühgetrockneten Aromen können Einzelsubstanzen bzw. Substanzgemische eingesetzt werden. Vorteilhafte Trägerstoffe sind Kohlenhydrate und/oder Kohlenhydratpolymere (Polysaccharide). Als Trägerstoffe sind beispielsweise Hydrokolloide wie Stärken, abgebaute Stärken, chemisch oder physikalisch modifizierte Stärken, modifizierte Cellulosen, Gummi Arabicum, Ghatti-Gummi, Traganth, Karaya, Carrageenan, Guarkernmehl, Johannisbrotkernmehl, Alginate, Pektin, Inulin oder Xanthan Gum zu nennen.

Bevorzugte Trägerstoffe sind Maltodextrine, wobei Maltodextrine mit DE-Werten im Bereich 15 bis 20 hier vorteilhaft sind.

Der Zersetzungsgrad der Stärke wird mit der Kennzahl "Dextrose-Equivalent" (DE) gemessen, welche die Grenzwerte 0 für das langkettige Glucosepolymer und 100 für die reine Glucose annehmen kann.

Als Aromen kommen beispielsweise etherische Öle, Fraktionen daraus, oder einzelne Aromastoffe in Frage.

Beispielsweise seien genannt: Extrakte aus natürlichen Rohstoffen wie Etherische Öle, Concretes, Absolues, Resine, Resinoide, Balsame, Tinkturen wie Anisöl; Bergamotteöl; Citronenöl; Eucalyptusöl; Grapefruitöl; Kamillenöl; Limetteöl; Nelkenblütenöl, Orangenöl; Pfefferminzöl; Rosmarinöl; Salbeiöl; Sternanisöl; Thymianöl; Vanilleextrakt; Wacholderbeeröl; Wintergrünöl; Zimtblätteröl; Zimtrindenöl; sowie Fraktionen davon, bzw. daraus isolierte Inhaltsstoffe.

Einzelne Aromastoffe, die Bestandteil des Aromas sein können, sind beispielsweise aus folgenden Stoffklassen: Aliphatische Ester (gesättigt und ungesättigt) z.B. Ethylbutyrat, Allylcapronat; aromatische Ester z.B. Benzylacetat, Methylsalicylat; organische aliphatische Säuren (gesättigt und ungesättigt) z.B. Essigsäure, Capronsäure; organische aromatische Säuren; aliphatische Alkohole (gesättigt und ungesättigt); cyclische Alkohole z.B. Menthol; aromatische Alkohole z.B. Benzylalkohol; aliphatische Aldehyde (gesättigt und ungesättigt) z.B. Acetaldehyd; aromatische Aldehyde z.B. Benzaldehyd; Vanillin; Ketone z.B. Menthon; cycische Ether z.B. 4-Hydroxy-5-methylfuranon; aromatische Ether z.B. p-Methoxybenzaldehyd, Guajacol; Lactone z.B. gamma-Decalacton; Terpene z.B. Limonen, Linalool, Terpinen, Terpineol, Citral.

Als Aromen im Rahmen der vorliegenden Erfindung sind bevorzugt: Beeren, Citrus, Kernobst, Vanille, Gewürze, Kräuter, Minze. Besonders bevorzugte Aromen sind Citronen- und Orangenaromen. Diese Aromen sind bei flüssiger Auftragung auf Tee sehr oxidationsanfällig und führen daher leicht zur unerwünschten sensorischen Fehlnoten (Off - Noten). Mit dem erfindungsgemäßen Verfahren können Tees, insbesondere Beuteltees hergestellt werden, bei denen die Neigung zur sensorischen Fehlnoten (Off - Noten) stark reduziert ist, ohne dass es zu einer Entmischung des Tees und des Aromas kommt.

Der Sprühlösung zur Herstellung der erfindungsgemäß einzusetzenden sprühgetrockneten Aromen können auch übliche Zusatzstoffe und Zutaten wie Lebensmittel-Farbstoffe, Süßstoffe, Antioxidantien, Genusssäuren wie Zitronensäure, geschmacksbeeinflussende Stoffe wie Natriumglutamat, Vitamin, Mineralstoffe, Saftkonzentrate etc. zugegeben werden, so dass die erfindungsgemäß eingesetzten sprühgetrockneten Aromen auch solche Zusatzstoffe enthalten können.

Die erfindungsgemäß eingesetzten sprühgetrockneten Aromen weisen eine mittlere Partikelgröße (Medianwert) von 10 bis 100 Mikrometern auf, vorzugsweise einen Medianwert von größer oder gleich 10 und kleiner oder gleich 70 Mikrometern, besonders bevorzugt einen Medianwert von größer oder gleich 15 und kleiner oder gleich 50 Mikrometern, In dem letztgenannten Bereich wird die Entmischung von Teepartikeln (insbesondere Teeblättern) und sprühgetrocknetem Aroma am stärksten vermieden. Das weitestgehende bis vollständige Fehlen einer Entmischung ist besonders auffällig bei aromatisiertem Tee im engeren Sinne und bei Tees mit einer mittleren und groben Tee-Partikelgröße bis 2,5 mm, insbesondere bei Broken- und Fannings-Tees. Überraschenderweise wurde festgestellt, dass erfindungsgemäße sprühgetrocknete Aromen mit einer mittleren Partikelgröße bis 100 µm, insbesondere mit einer mittleren Partikelgröße von 10 bis 50 µm, besonders gut an mit Neutralöl benetzte Tee-Bestandteile adsorbieren und nur eine sehr geringe Neigung zum Entmischen aufweisen.

Die vorteilhafte Menge an sprühgetrocknetem Aroma liegt bei 0,1 bis 8 Gew.-%, bevorzugt von 0,5 bis 5 Gew.-%, besonders bevorzugt von 0,8 bis 4 Gew.-%, bezogen auf die Einwaage der Teeblätter.

Unter "Neutralöl" wird in der vorliegenden Erfindung ein im Wesentlichen geschmacksneutrales Triglycerid verstanden, wie beispielsweise ein Pflanzenöl. Besonders geeignet sind die geschmacksneutralen Trigylceride mit gleichen oder verschiedenen C₆ bis C₁₀ - Fettsäureresten (MCT, medium-chain triglyceride), die zudem hervorragende spreitende und benetzende Eigenschaften im Hinblick auf die Teeblätter aufweisen. Als Neutralöl kann in weniger bevorzugten Ausführungsformen der Erfindung auch Polyethylenglycol (PEG), Glycerin und/oder Triacetin verwendet werden. Diese Substanzen sind weniger bevorzugt, da sie schlechter spreiten als Triglycerid-Neutralöle, teilweise hygroskopisch sind und die unerwünschte Agglomeration von Teepartikeln und Teeblättern fördern können.

Die vorteilhafte Menge an Neutralöl beträgt 0,1 - 3 Gew.-%, bevorzugt 0,5 bis 2 Gew.-%, bezogen auf die Einwaage der Teepartikel, insbesondere der Teeblätter. Dabei werden die Teepartikel genügend benetzt, ohne dass es zu einer unerwünschten Verölung des Tees insbesondere beim Aufbrühen kommt.

Zusätzlich kann dem Neutralöl ein Duft- oder Aromastoff zugesetzt werden, um den Tee zu odorieren. Dieser Duft- oder Aromastoff kann fest oder flüssig sein.

Allgemein gesprochen werden beste Ergebnisse mit einem Verfahren erzielt, bei dem der Tee in einem fluidisierenden Mischer vorgelegt wird. Typische Mischer sind z.B. Pflugscharmischer (Hersteller: Lödige) bzw. Mehrstromfluidmischer (Hersteller: Gericke).

Nach dem Fluidisieren des Tees durch den Mischer wird mittels einer Düse das Neutralöl auf die Teeblätter aufgesprüht. Hiernach wird das sprühgetrocknete Aroma zu dem fluidisierten Tee gegeben. Hierdurch kommt es zur Verteilung und zur Anbindung des sprühgetrocknete Aromas an die Teeblätter.

Die Mischung wird entsprechend nachgemischt, bis eine hinreichende Verteilung des sprühgetrockneten Aromas im Tee erreicht ist.

Die Erfindung wird anhand der folgenden Beispiele weiter erläutert, ohne dass die Beispiele den Gegenstand der Erfindung oder den Schutzbereich beschränken soll:

### Beispiel 1

Ein orange eingefärbtes sprühgetrocknetes Aroma (enthaltend Maltodextrin (DE: 18-20), Dextrose, Gummi Arabicum, Orangenöl, Acetaldehyd, Farbstoff (um die Mischungsqualität visuell beurteilen zu können) und das Antioxidans Ascorbylpalmitat) mit folgender Partikelgrößenverteilung wurde über eine Druckdüse hergestellt:
D (v 0,1): 16,8 Mikrometer.
D (v 0,5): 48,02 Mikrometer,
D (v 0,9): 96,4 Mikrometer
850 g Schwarztee Fannings werden in einen 5 Liter Lödige Pflugscharmischer vorgelegt. Die Teeblätter werden 10 Sekunden vorgemischt und fluidisiert.

Ohne Unterbrechung des Mischprozesses wird mittels einer Ein- oder Zweistoffdüse 6 g eines feinen Neutralöl-Nebels (MCT-Ölaerosol) auf die fluidisierten Teeblätter gesprüht. Dies dauert etwa 60 Sekunden.

Ohne Unterbrechung des Mischprozesses wird anschließend 40 g des oben genannten orange eingefärbten sprühgetrockneten Aromas zu der Mischung gegeben und die gesamte Mischung weitere 60 Sekunden gemischt.

### Beispiel 2

Ein sprühgetrocknetes Vanillearoma (enthaltend Maltodextrin (DE: 18-20), Dextrose, Gummi Arabicum, Vanillin) mit folgender Partikelgrößenverteilung wurde über eine Druckdüse hergestellt:
D (v 0,1): 14,1 Mikrometer,
D (v 0,5): 47,08 Mikrometer,
D (v 0,9): 85,3 Mikrometer
800 g Rotbusch-Tee (Rooibos-Tee) werden in einen 5 Liter Lödige Pflugscharmischer vorgelegt, Die Teeblätter werden 10 Sekunden lang vorgemischt und fluidisiert.

Ohne Unterbrechung des Mischprozesses werden mittels einer Ein- oder Zweistoffdüse 5 g eines feinen Neutralöl-Nebels (MCT-Ölaerosol) auf die fluidisierten Teeblätter gesprüht. Dies dauert etwa 60 Sekunden.

Ohne Unterbrechung des Mischprozesses werden anschließend 33 g des oben genannten adhäsiven, sprühgetrockneten Aromas zu der Mischung gegeben und die gesamte Mischung weitere 60 Sekunden lang gemischt.

### Beispiel 3

Ein sprühgetrocknetes Vanillearoma (enthaltend Maltodextrin (DE: 18-20), Dextrose, Gummi Arabicum, Vanillin) mit folgender Partikelgrößenverteilung wurde über eine Druckdüse hergestellt:
D (v 0,1): 14,1 Mikrometer,
D (v 0,5): 47,08 Mikrometer,
D (v 0,9): 85,3 Mikrometer
650 g Schwarztee mit dem Blattgrad Broken (large cut) werden in einen 5 Liter Lödige Pflugscharmischer vorgelegt. Die Teeblätter werden 10 Sekunden lang vorgemischt und fluidisiert.

Ohne Unterbrechung des Mischprozesses werden mittels einer Ein- oder Zweistoffdüse 3,6 g eines feinen Neutralöl-Nebels (MCT-Ölaerosol) auf die fluidisierten Teeblätter gesprüht. Dies dauert etwa 60 Sekunden.

Ohne Unterbrechung des Mischprozesses werden anschließend 24 g des oben genannten adhäsiven, sprühgetrockneten Aromas zu der Mischung gegeben und die gesamte Mischung weitere 60 Sekunden gemischt

Gerade hier war eine entmischungsstabile Aromatisierung nicht zu erwarten.

### Beispiel 4: Bestimmen der Entmischung (Segregation)

Unter der Entmischung (Segregation) einer Feststoffmischung versteht man das unerwünschte Separieren einer oder mehrerer Komponenten der Mischung.

Die Entmischung tritt meist infolge Vibration, Umfüllen, Transport oder sonstiges Bewegen der Mischung auf.

Die Entmischungsneigung der Mischung wurde wie folgt beurteilt:
a) Visuell: durch visuelles Vergleichen mehrerer Stichproben bzgl. der Aromenverteilung im Tee.
b) sensorische Verkostung: unterschiedliche Stichproben der Mischung wurden in einem Dreieckstest in einem Panel getestet und die sensorische Abweichung bzgl. der Aromenintensität beurteilt.
c) Siebanalyse: 100 g einer Probe der Mischung wurden mit einen 100 µm Sieb abgesiebt. Je geringer die Fraktion mit einer Partikelgrößen < 100 µm war, desto entmischungsstabiler wurde die Mischung bezeichnet.

## Patentansprüche

1. Verfahren zum Aromatisieren von Tee, umfassend die Schritte:
a) Vorlegen von zu aromatisierenden Teepartikeln,
b) Versehen der im Mischer vorgelegten Teepartikel mit einem Neutralöl zum Benetzen der Oberfläche der Teepartikel, und
c) Untermischen von sprühgetrocknetem Aroma unter die mit dem Neutralöl benetzten Teepartikel.

2. Verfahren nach Anspruch 1, **dadurch gekennzeichnet, dass** die zu aromatisierenden Teepartikel in Schritt c) eine Partikelgröße bis 1,5 cm besitzen und vorzugsweise eine Partikelgröße von 0,5 mm bis 1,5 cm besitzen.

3. Verfahren nach einem der vorherigen Ansprüche, **dadurch gekennzeichnet, dass** das sprühgetrocknete Aroma eine mittlere Partikelgröße von 10 bis 100 µm besitzt.

4. Verfahren nach einem der vorherigen Ansprüche, **dadurch gekennzeichnet, dass** zum Untermischen des sprühgetrockneten Aromas in Schritt c) ein fluidisierender Mischer verwendet wird.

5. Verwendung eines sprühgetrockneten Aromas mit einer mittleren Partikelgröße von 10 bis 100 µm zum Aromatisieren eines Tees.

6. Aromatisierter Tee, herstellbar und/oder hergestellt nach einem Verfahren gemäß einem der Ansprüche 3 bis 4.

7. Aromatisierter Tee, umfassend oder bestehend aus Teepartikeln mit einer Partikelgröße bis 1,5 cm, vorzugsweise mit einer Partikelgröße von 0,5 mm bis 1,5 cm, wobei die Oberfläche der Teepartikel mit einem Neutralöl benetzt ist, und daran adsorbiertem sprühgetrocknetem Aroma.

8. Teebeutel enthaltend einen aromatisierten Tee gemäß einem der Ansprüche 6 bis 7.

## Claims

1. A method for flavouring tea, comprising the following steps:
a) tea particles to be flavoured are placed in a mixer,
b) the tea particles placed in the mixer are treated with a neutral oil in order to wet the surface of the tea particles, and
c) spray-dried flavouring is intermixed with the tea particles wetted with the neutral oil.

2. A method according to claim 1, **characterised in that,** in step c), the tea particles to be flavoured have a particle size of up to 1.5 cm and preferably a particle size of 0.5 mm to 1.5 cm.

3. A method according to either one of the preceding claims, **characterised in that** the spray-dried flavouring has a mean particle size of 10 to 100 µm.

4. A method according to any one of the preceding claims, **characterised in that** a fluidising mixer is used to intermix the spray-dried flavouring in step c).

5. Use of a spray-dried flavouring with a mean particle size of 10 to 100 µm for flavouring a tea.

6. A flavoured tea preparable and/or prepared by a method according to any one of claims 3 to 4.

7. A flavoured tea comprising or consisting of tea particles with a particle size of up to 1.5 cm, preferably with a particle size of 0.5 mm to 1.5 cm, the surface of the tea particles being wetted with a neutral oil, and spray-dried flavouring adsorbed thereon.

8. A tea bag containing a flavoured tea according to either of claim 6 or claim 7.

## Revendications

1. Procédé pour aromatiser le thé comprenant les étapes :
a) disposer au préalable des particules de thé à aromatiser,
b) munir les particules de thé disposées au préalable dans le mélangeur d'une huile neutre pour mouiller la surface des particules de thé, et
c) mélanger un arôme séché par pulvérisation avec les particules de thé mouillées avec l'huile neutre.

2. Procédé selon la revendication 1 **caractérisé en ce que** les particules de thé à aromatiser possèdent une taille de particules pouvant atteindre 1,5 cm et possèdent de préférence une taille de particules de 0,5 mm à 1,5 cm dans l'étape c).

3. Procédé selon l'une des revendications précédentes **caractérisé en ce que** l'arôme séché par pulvérisation possède une taille de particules moyenne de 10 à 100 µm.

4. Procédé selon l'une des revendications précédentes **caractérisé en ce que,** pour mélanger l'arôme séché par pulvérisation dans l'étape c), un mélangeur fluidisant est utilisé.

5. Utilisation d'un arôme séché par pulvérisation ayant une taille de particules moyenne de 10 à 100 µm pour aromatiser un thé.

6. Thé aromatisé pouvant être produit et/ou produit selon un procédé selon l'une des revendications 3 à 4.

7. Thé aromatisé comprenant ou consistant en particules de thé ayant une taille de particules pouvant atteindre 1,5 cm, de préférence ayant une taille de particules de 0,5 mm à 1,5 cm, où la surface des particules de thé est mouillée avec une huile neutre, et un arôme séché par pulvérisation adsorbé sur celles-ci.

8. Sachet de thé contenant un thé aromatisé selon l'une des revendications 6 à 7.
